# EUROPÄISCHE PATENTSCHRIFT

(11) **EP 3 256 803 B1**
(45) Veröffentlichungstag und Bekanntmachung des Hinweises auf die Patenterteilung: **14.04.2021**
(21) Anmeldenummer: 15707262.0
(22) Anmeldetag: 13.02.2015
(51) Int. Cl.: F26B 17/02, B65G 47/16, F26B 25/00

(54) **TROCKNER-GUTAUFGABEVORRICHTUNG**
DEVICE FOR FEEDING A DRYER WITH MATERIAL
DISPOSITIVE POUR ALIMENTER UN SÉCHOIR AVEC MATÉRIAU

(43) Veröffentlichungstag der Anmeldung: 20.12.2017
(73) Patentinhaber: Stela Laxhuber GmbH, 84323 Massing (DE)
(72) Erfinder: LAXHUBER, Thomas Christian, 84323 Massing (DE); RAUSCHEDER, Andreas A. J., 84419 Obertaufkirchen (DE)
(74) Vertreter: Rothkopf, Ferdinand
(86) Internationale Anmeldenummer: PCT/DE2015/100061
(87) Internationale Veröffentlichungsnummer: WO 2016/127968

(56) Entgegenhaltungen:
- CN-A- 103 723 487
- CN-Y- 2 604 659
- DE-U1- 9 419 080
- DE-U1-202009 000 751
- FR-A- 1 117 393
- JP-A- S5 326 475
- US-A- 2 389 845

## Beschreibung

Die Erfindung betrifft eine Trockner-Gutaufgabevorrichtung zum Verteilen von zu trocknendem Gut an einem Trockner über die Breite einer das Gut durch den Trockner transportierenden Transporteinrichtung mit einer Zugabeöffnung zum Zugeben des zu trocknenden Gutes in die Trockner-Gutaufgabevorrichtung. Ferner betrifft die Erfindung ein Verfahren zum Betreiben einer solchen Trockner-Gutaufgabevorrichtung.

Unter Trocknung wird allgemein der Entzug von Flüssigkeiten aus einem Stoff oder Gegenstand, dem zu trocknendem Gut, verstanden. Zu trocknendes Gut sind beispielsweise Körnermais, Weizen, Stroh, Hackschnitzel, Sägespäne und Grüngut, also nachwachsende Rohstoffe, insbesondere in Form granularer bzw. körniger Stoffe. Vom zu trocknenden Gut wird dessen Feuchtegehalt verringert, indem durch eine thermisch-physikalische Umwandlung einer Flüssigkeit dem zu trocknendem Gut diese Flüssigkeit entzogen wird. Ein vollständiges Entziehen der Flüssigkeit wird dabei meist nicht angestrebt, sondern es wird auf einen definierten Trocknungsgrad getrocknet. Bei der Flüssigkeit handelt es sich meist um Wasser und die thermisch-physikalische Umwandlung ist eine Phasenumwandlung von einem flüssigen in einen gasförmigen Zustand.

Grundlage der Phasenumwandlung vom flüssigen in den gasförmigen Zustand und damit der Trocknung sind erstens der Dampfdruck, zweitens das Konzentrationsgefälle und drittens die Möglichkeit einer Flüssigkeitsabgabe. Der Dampfdruck steigt bei höherer Temperatur, was insbesondere bedeutet, dass heißere Luft mehr Wasser aufnehmen kann als kältere Luft. Wenn die Luft heißer wird, wird der Volumenanteil des Wassers in der Luft geringer bzw. die Luft wird trockener. Dadurch nimmt das Konzentrationsgefälle der Konzentration an Wasser im zu trocknenden Gut und in einer das Gut umgebenden, heißen Luft, der Trockenluft, zu. Die Möglichkeit der Flüssigkeitsabgabe ist allgemein die Möglichkeit des zu trocknenden Gutes das in ihm enthaltene Wasser nach außen hin abzugeben.

Um Bedingungen einer weitgehend optimalen Trocknung zu erreichen, wird demnach dem zu trocknenden Gut Wärme zugeführt und das zu trocknende Gut dabei möglichst vollständig und gleichmäßig stark von Trockenluft umströmt.

Bei Trocknern findet je nach Bauart eine Strahlungs-, Kontakt- oder Konvektivtrocknung statt. Bei der Konvektivtrocknung wird die Wärme einer Trockenluft zugeführt und diese damit erhitzt. Die dann heiße Trockenluft wird meist mittels Ventilatoren zu dem zu trocknenden Gut transportiert. Bei der Kontakttrocknung wird dem zu trocknendem Gut durch einen Kontakt mit einer heißen Oberfläche Wärme zugeführt. Bei der Strahlungstrocknung wird Wärme zum Trocknen dem zu trocknenden Gut über Strahlung zugeführt. Prinzipiell kann die Strahlung der Strahlungstrocknung nach ihrer Frequenz bzw. Wellenlänge in Hochfrequenz-, Mikrowellen- und Infrarottrocknung eingeteilt werden. Bei den obengenannten Bauarten von Trocknern kann die Trocknung kontinuierlich oder diskontinuierlich erfolgen. Bei einem kontinuierlich arbeitenden Trockner wird das zu trocknende Gut stetig transportiert, wohingegen ein diskontinuierlich arbeitender Trockner chargenweise befüllt und entleert wird.

Um bei einem kontinuierlich arbeitenden Trockner das zu trocknende Gut stetig durch den Trockner zu fördern, wird eine Fördereinrichtung genutzt, die oft als Förderband gestaltet ist. Auf dem Förderband befindet sich das zu trocknende Gut. Das Förderband ist in der Regel luftdurchlässig ausgeführt, damit die Trocknungsluft in einem so genannten Trockenbereich durch das Förderband strömen kann. Wenn es sich bei dem zu trocknenden Gut um einen granularen bzw. körnigen Stoff handelt, wird damit dann auch eine Luftströmung durch das auf dem Förderband liegende zu trocknende Gut generiert.

Bei dem auf dem Förderband liegende zu trocknende, granularen bzw. körnigen Gut werden dabei einzelne Partikel bzw. Körper von der Luftströmung umströmt, wobei das zu trocknende Gut einen Luftwiderstand verursacht. Dieser Luftwiderstand wird durch eine Schichtdicke des zu trocknenden Gutes auf dem Förderband beeinflusst. Je größer die Schichtdicke, umso höher der Luftwiderstand. Um einen gleichmäßigen Trocknungsgrad des zu trocknenden Gutes zu erreichen ist es notwendig, dass die Schichtdicke auf dem Förderband, und damit der Luftwiderstand, gleichmäßig groß ist.

Bei einem kontinuierlich arbeitenden Trockner muss das zu trocknende Gut stetig in den Trockner und auf das Förderband aufgebracht werden. Um dies zu erreichen wird das zu trocknende Gut mit einer Fördereinrichtung, welche meist als eine Fördererschnecke oder ein Trogkettenförderer ausgeführt ist, zu dem Trockner hin gefördert. Die Förderschnecke transportiert dabei das zu trocknende Gut an eine einzelne Stelle, also punktuell, an den Trockner, von wo aus es dann auf dem Förderband verteilt werden muss. Die Schwierigkeit dabei ist, das punktuell an den Trockner herangeförderte, zu trocknende Gut so zu verteilen, dass eine gleichmäßige Schichtdicke und Schüttdichte sowie eine vollflächige Förderbandbelegung in dem Trockenbereich vorhanden ist.

Aus US 2 389 845 ist ein Verteilbehälter bekannt, der im Zusammenhang mit kontinuierlichen Trocknern zum Trocknen von feuchtfestem Material zu verwenden ist, wie zum Beispiel von Quark zur Herstellung von Kasein. Dazu ist im oberen Bereich einer Wanne des Verteilbehälters eine obere Förderschnecke angeordnet, mittels der das Material von einer Zuführeinrichtung in zwei einander entgegensetzte Richtungen abzufördern ist. Um eine gleichmäßige Verteilung aufrecht zu erhalten, ist im unteren Bereich der Wanne eine untere Förderschnecke angeordnet, die in der gleichen Weise wie die obere Förderschnecke arbeitet.

Aus JP S53 26475 A ist eine Vorrichtung zum kontinuierlichen Verteilen von körnigem Material bekannt. Dabei ist eine Vielzahl von Schneckenförderern in mehreren Stufen abwärts von einem Auslass des Förderers angeordnet.

Gemäß der Erfindung ist eine Trockner-Gutaufgabevorrichtung zum Verteilen von zu trocknendem Gut an einem Trockner über die Breite einer das Gut durch den Trockner transportierenden Transporteinrichtung mit einer Zugabeöffnung zum Zugeben des zu trocknenden Gutes in die Trockner-Gutaufgabevorrichtung, mit einer Zubringeinrichtung zum Zubringen des zu trocknenden Gutes zu der Zugabeöffnung und einer Verteileinrichtung zum Verteilen des durch die Zugabeöffnung eingebrachten zu trocknenden Gutes über die Breite der Transporteinrichtung hinweg geschaffen, wobei durch die Verteileinrichtung das zu trocknende Gut von der Zugabeöffnung aus in zwei einander entgegengesetzte Richtungen abzufördern ist.

Die erfindungsgemäße Lösung beruht wie erläutert auf der Erkenntnis, dass das in den Trockner aufzugebende, zu trocknende Gut über die Breite der durch den Trockner transportierenden Transporteinrichtung zu verteilen ist. Das zu trocknende Gut ist dabei von einer Zubringeinrichtung zu einer Zugabeöffnung und durch die Zugabeöffnung hindurch, in die Trockner-Gutaufgabevorrichtung aufzugeben. Gemäß der Erfindung ist in der Trockner-Gutaufgabevorrichtung eine Verteileinrichtung vorgesehen mittels der das zu trocknende Gut von der Zugabeöffnung aus hinsichtlich der Breite der dortigen Transporteinrichtung des Trockners in zwei entgegengesetzte Richtungen abzufördern ist. Aufgrund dieses erfindungsgemäßen Abförderns in zwei entgegengesetzte Richtungen wird trotz eines weitgehend punktuellen Heranförderns, durch die Zubringeinrichtung, eine besonders gute Verteilung des zu trocknenden Gutes auf der zugehörigen Transporteinrichtung erzielt. Diese Verteilung bewirkt eine sehr gleichmäßige Schichtdicke, wodurch ein gleichmäßiger Luftwiderstand über die Breite der Transporteinrichtung hinweg insbesondere bei einer Konvektionstrocknung zu erreichen ist. Dieser gleichmäßige Luftwiderstand führt zu einem besonders homogenen Trocknungsgrad des zu trocknendem Gutes, wodurch eine Qualitätssteigerung beim Vorgang des Trocknens erreicht wird.

Um das aufgebrachte, zu trocknende Gut wie erläutert in Form einer Schicht durch den Trockner zu transportieren, weist die Transporteinrichtung die genannte, gewisse Breite auf. Das hinsichtlich dieser Breite durch die Zugabeöffnung hindurch eingebrachte, zu trocknende Gut wird von der Verteileinrichtung zur Seite hin über die Transporteinrichtung hinweg verteilt. Die Transporteinrichtung ist dabei vorteilhaft als Förderband ausgeführt. Das eingebrachte zu trocknende Gut wird dabei in zwei einander entgegengesetzte Richtungen abgefördert. Das Abfördern durch die Verteileinrichtung in zwei entgegengesetzte Richtungen bewirkt eine Teilung des eingebrachten zu trocknenden Gutes in zwei volumenähnliche Teile. Durch die Teilung in zwei volumenähnliche Teile wird auch die mechanische und volumenmäßige Belastung der Verteileinrichtung auf jeder Seite mit der jeweiligen Hälfte an zu verteilendem Gut halbiert. Mit der derartigen erfindungsgemäßen Halbierung der Belastung kann bei gleicher Dimensionierung der Verteileinrichtung, eine annähernd doppelte Menge von zu trocknendem Gut durch die Zugabeöffnung eingebracht und verteilt werden. Wenn die annähernd doppelte Menge von zu trocknendem Gut nicht erforderlich ist, kann dementsprechend die Dimensionierung der Verteileinrichtung verkleinert, und an die Anforderungen der Verteilmenge angepasst werden.

Erfindungsgemäß ist in der Trockner-Gutaufgabevorrichtung an der Verteileinrichtung eine erste Förderschnecke vorgesehen, mit der das in zwei einander entgegengesetzte Richtungen erfolgende Abfördern auszuführen ist. Diese erste Förderschnecke kann nach dem Funktionsprinzip einer archimedischen Schraube mit einer Schneckenwelle bzw. einer Schneckennabe und mit einem Schneckengewinde bzw. einer Schneckenwindung gestaltet sein. Die Schneckenwindung windet sich dabei, ortsfest und momentenübertragend verbunden, um die dann drehangetriebene Schneckenwelle. Durch Drehung der Schneckenwelle und der damit verbundenen Schneckenwindung, fördert die Förderschnecke das zu trocknende Gut von der Zugabeöffnung weg in Längsrichtung der Schneckenwelle. Die Drehrichtung und eine Windungsrichtung der Schneckenwindung bestimmt die Förderrichtung des zu trocknenden Gutes entlang der Förderschnecke.

Ferner ist die erste Förderschnecke vorzugsweise so ausgeführt, dass an ihr zwei einander entgegengesetzt gewundene Schneckenwindungen vorgesehen sind. Die zwei einander entgegensetzt gewunden Schneckenwindungen sind wie oben erläutert vorzugsweise ortsfest mit der Schneckenwelle verbunden. Dadurch, dass die Schneckenwindungen einander entgegengesetzt gerichtet sind, fördert eine erste Schneckenwindung bei ein und derselben Drehrichtung das zu trocknende Gut in die eine Längsrichtung der Förderrichtung. Eine zweite Schneckenwindung, die entgegengesetzt zu der ersten Schneckenwindung gewunden ist, fördert bei gleicher Drehrichtung in die entgegengesetzte Längsrichtung der Förderrichtung. Die beiden Schneckenwindungen können dabei so gestaltet sein, dass sie in einem Längsbereich bzw. Längsabschnitt der Schneckenwelle mit einem ihrer Enden nebeneinander zu liegen kommen. Vorzugsweise kontaktieren die Schneckenwellen einander in diesem Längsabschnitt. Dieser Längsabschnitt, der auch als Wechsel der Windungsrichtung bezeichnet werden kann, also jener Bereich, in dem die eine Schneckenwindung in eine entgegengesetzt gewundene Schneckenwindung wechselt, ist vorzugsweise in der Mitte der Breite der Transporteinrichtung und insbesondere auch in der Mitte der Zugabeöffnung selbst angeordnet. Damit kann eine besonders gleichmäßige Förderung zu zwei einander entgegengesetzte Seiten hin ermöglicht werden.

Erfindungsgemäß ist ferner an der Verteileinrichtung der Trockner-Gutaufgabevorrichtung eine zweite Förderschnecke vorgesehen, mittels der das zu trocknende Gut aus zwei einander entgegensetzen Richtungen zur Mitte der Transporteinrichtung hin zusammenzufördern ist. Die zweite Förderschnecke ist vorzugsweise wie die oben bereits erwähnte erste Förderschnecke nach dem Funktionsprinzip einer archimedischen Schraube mit einer Schneckenwindung und mit einer Schneckenwelle gestaltet. Auch an dieser Schneckenwelle sind, wie bei der oben bereits erwähnten ersten Förderschnecke, vorteilhaft zwei einander entgegengesetzt gewundene Schneckenwindungen ortsfest verbunden. Diese entgegengesetzt gewundenen Schneckenwindungen der zweiten Förderschnecke fördern, im Gegensatz zu der ersten Förderschnecke, das zu trocknende Gut nicht auseinander, sondern zusammen. Die zweite Förderschnecke fördert also mit nur einer Drehrichtung das zu trocknende Gut aus zwei einander entgegengesetzten Richtungen zur Mitte der Transporteinrichtung zusammen. Dazu können die zwei Schneckenwindungen, die einander entgegengesetzt gewunden sind, vorteilhaft je gleiche Windungsrichtung aufweisen, wie bei der ersten Förderschnecke, wohingegen die Drehrichtung der zweiten Förderschnecke vorteilhaft entgegengesetzt zur Drehrichtung der ersten Förderschnecke gewählt ist. Dadurch kann, indem die Förderschnecke "zueinander rotieren", das zu verteilende, zu trocknende Gut zwischen den beiden Förderschnecken "gehalten" werden. Um das zu trocknende Gut dabei in der Verteileinrichtung zu halten, ist besonders vorteilhaft die zweite Förderschnecke mit einem Schneckentrog ausgebildet. Der Schneckentrog ist vorteilhaft gewölbt gestaltet bzw. im Querschnitt bevorzugt halbkreisförmig oder U-förmig und nimmt die Förderschnecke in ihrer gesamten Länge auf. Der Schneckentrog verhindert aufgrund seiner Form ein Ausweichen des damit geförderten Gutes zur Seite hin sowie nach unten und ist vorzugsweise entsprechend eng an die Außenkontur der Förderschnecke angepasst.

Bevorzugt ist erfindungsgemäß die Zubringeinrichtung in Abhängigkeit der Belastung der Verteileinrichtung geregelt. Bei der Verteileinrichtung ist erfindungsgemäß bevorzugt zum Verteilen des zu trocknenden Gutes eine Förderschnecke, besonders bevorzugt zwei Förderschnecken vorgesehen. Die Förderschnecke fördert bzw. verteilt, wie oben bereits erwähnt, mittels der drehangetriebenen Schneckenwelle, welche von einem Antrieb, der vorteilhaft als ein Elektromotor ausgeführt ist, gedreht wird. Der Antrieb wandelt dabei in der Regel elektrische Energie in eine Drehbewegung um, womit an der Schneckenwelle ein Antriebsmoment erzeugt wird, dem durch die Förderschnecke, ein Lastmoment bzw. Gegenmoment entgegenwirkt. Das Lastmoment ist dabei abhängig von der Menge bzw. Masse des zu trocknendem Gutes, welches gerade von der Förderschnecke zu fördern ist. Erhöht sich die Masse des von der Förderschnecke zu förderndem Gutes, so erhöht sich das Lastmoment und damit das aufzubringende Antriebsmoment des Antriebs. Bei Verringerung der Masse des zu förderndem Gutes, verringert sich das Lastmoment und damit das aufzuwendende Antriebsmoment des Antriebs. Die vom Antrieb benötigte, in der Regel elektrische Energie, um das Antriebsmoment zu erzeugen, kann mit einem Energiemessgerät gemessen werden und ist damit, dies wurde erfindungsgemäß erkannt, ein Indikator für die von der Förderschnecke geförderte Masse des zu trocknenden Gutes. Diese Masse des zu trocknenden Gutes wird mittels der Zubringeinrichtung, wie oben erläutert, durch die Zugabeöffnung hindurch, in die Trockner-Gutaufgabevorrichtung eingebracht. In der Trockner-Gutaufgabevorrichtung wird das zu trocknende Gut mittels der ersten Förderschnecke der Verteileinrichtung auf die Transporteinrichtung verteilt. Die erste Förderschnecke verteilt dabei eine von der Schichtdicke auf der Transporteinrichtung und von der Breite der Transporteinrichtung abhängige, definierte Menge bzw. Masse von zu trocknendem Gut. Befindet sich jedoch eine größere Masse als benötigt in der Verteileinrichtung, so wird dort eine überschüssige Masse angehäuft. Die Anhäufung führt dazu, dass in der Trockner-Gutaufgabevorrichtung die Masse des zu trocknenden Gutes ansteigt und es zu einer verstärkten mechanischen Belastung der dortigen Bauteile und gegebenenfalls zu mechanischen Schäden kommen könnte. Um solche Schäden zu vermeiden, wird erfindungsgemäß bevorzugt die vom Antrieb aufgenommene, in der Regel elektrische Energie gemessen. Wenn die aufgenommene Energie einen definierten Wert übersteiget, wird vorteilhafterweise an die Zubringeinrichtung von einer Steuerung bzw. Regelung, mittels einer Leitung bevorzugt einem elektrischen Kabel, ein Signal übermittelt. Dieses Signal dient der Zubringeinrichtung als Indikator, ob die pro Zeiteinheit zuzubringende Masse an zu trocknendem Gut von der Zubringeinrichtung reduziert, gleich belassen oder erhöht werden soll. Mit der derartigen Erhöhung bzw. Reduzierung der zugeführten Masse von zu trocknendem Gut wird also der Verteileinrichtung in abgestimmter Weise Masse von zu trocknendem Gut zugeführt. Die derart abgestimmte Zuführung von zu trocknendem Gut verhindert zusätzlich auch eine ungleichmäßige Schichtdicke auf der Transporteinrichtung, welche sich aufgrund einer Unterversorgung der Verteileinrichtung mit zu trocknendem Gut ergeben könnte. Die derart abgestimmte Zuführung von zu trocknendem Gut führt zu einer gleichmäßigen mechanischen Belastung der Verteileinrichtung, was eine Reduzierung des Verschleißes aufgrund von Belastungsschwankungen zur Folge hat. Mit der derartigen erfindungsgemäß vorteilhaften Regelung des Energieverbrauchs der Verteileinrichtung wird gleichzeitig auch der Energiebedarf der gesamten Anlage verringert.

Ferner ist erfindungsgemäß mindestens eine der Förderschnecken der Trockner-Gutaufgabevorrichtung mit einer Überwurfeinrichtung zum Überwerfen des zu trocknenden Gutes ausgestattet. Die Überwurfeinrichtung dient zum aktiven Weiterreichen des zu trocknenden Gutes von einer Förderschnecke zu der anderen Förderschnecke. Dieses weitergereichte Gut ist insbesondere jenes Gut, dass noch nicht von der jeweiligen Förderschnecke auf die Transporteinrichtung verteilt werden konnte und daher von der zweiten Förderschnecke weiterverarbeitet werden soll. Diese Überwurfeinrichtung ist vorzugsweise momentenübertragend mit der dann drehangetriebenen Förderschnecke verbunden.

Erfindungsgemäß ist ferner je eine Überwurfeinrichtung an der ersten Förderschnecke an deren jeweiligen äußeren Endbereichen angeordnet. Zu den äußeren Endbereichen der ersten Förderschnecke wird das zu trocknende, mittig durch die Zugabeöffnung hindurch eingebrachte Gut, wie oben erklärt, vorzugsweise von zwei Schneckenwindungen abgefördert bzw. weggefördert. Die Schneckenwindungen würden dann an den äußeren Endbereichen der ersten Förderschnecke das überschüssige, nicht verteilte, zu trocknende Gut anhäufen. Um ein solches Anhäufen an den beiden äußeren Endbereichen zu vermeiden, wird mittels der Überwurfeinrichtungen das zu trocknende Gut aktiv wegbewegt bzw. überworfen.

Erfindungsgemäß ist ferner an der zweiten Förderschnecke eine (weitere) Überwurfeinrichtung an deren Mittelbereich angeordnet. Die zweite Förderschnecke fördert dabei das zu trocknende Gut von zwei einander entgegengesetzten Richtungen zur Mitte der Transporteinrichtung hin zusammen. Um an diesem Mittelbereich der zweiten Förderschnecke ein Anhäufen des zu trocknenden Gutes zu vermeiden, ist dann dort die zweite Förderschnecke mit der (weiteren) Überwurfeinrichtung ausgestattet. Die (weitere) Überwurfeinrichtung wirft im mittleren Bereich der zweiten Förderschnecke das überschüssige, zu fördernde Gut auf die zumindest eine andere Fördereinrichtung über.

Mindestens eine der genannten Überwurfeinrichtungen ist erfindungsgemäß mit mindestens einem Überwurfpaddel zum Überwerfen des zu trocknenden Gutes von der einen Förderschnecke zur anderen Förderschnecke ausgestattet. Das Überwurfpaddel ist vorteilhaft drehmomentenübertragend an der zugehörigen Schneckenwelle der Förderschnecke ortsfest angebracht. Die derartige Überwurfeinrichtung hebt bzw. schiebt das zu trocknende Gut von einer Förderschnecke zur anderen Förderschnecke über. Dabei wird insbesondere das zu trocknende Gut durch die Drehbewegung der zugehörigen Schneckenwelle von mindestens einem Überwurfpaddel aufgenommen und durch die Fliehkraft von dem Überwurfpaddel aktiv zur anderen Förderschnecke geworfen.

In bevorzugter Weise ist die Zugabeöffnung der Trockner-Gutaufgabevorrichtung hinsichtlich der Breite der Transporteinrichtung weitgehend mittig angeordnet. Die vorteilhaft mittige Anordnung der Zugabeöffnung bewirkt, dass die Transporteinrichtung von dem Gewicht des aufgebrachten zu trocknenden Gutes von der Mitte ausgehend zu beiden Seiten nach außen hin und damit über seine Fläche hinweg gleichmäßig belastet ist. Das gleichmäßige Belasten schont die Verteileinrichtung sowie die Transporteinrichtung und reduziert deren Verschleiß. Ferner verschiebt sich an der Transporteinrichtung insbesondere nicht ein Transportband in Richtung zu einem unbelasteten Bereich. Bei einem solchen Verschieben in Richtung eines unbelasteten Bereichs treten Verschiebekräfte auf, welche insbesondere von einer Lagerung des Transportbandes zu kompensieren wären.

Ferner ist diese erfindungsgemäße Lösung auch besonders universell einsetzbar. Mit der erfindungsgemäßen Zuführung kann an der Trockner-Gutaufgabevorrichtung gemäß der Erfindung die zugehörige Förderschnecke zum Heranfördern des dort aufzugebenden, zu trocknenden Gutes von beiden Seiten in gleicher Weise angeordnet werden. Die Erfindung kann damit auch bei verschiedenen Typen von Trocknern in gleicher Weise zur Anwendung kommen. Es ergeben sich damit Vereinfachungen hinsichtlich der Konstruktion der Trockner und der jeweils zugehörigen Trockner-Gutaufgabevorrichtungen.

Mit dem entsprechend gestalteten, erfindungsgemäßen Verfahren und seinen Weiterbildungen werden entsprechend die zur erfindungsgemäßen Trockner-Gutaufgabevorrichtung bereits genannten Vorteile erzielt.

Nachfolgend werden Ausführungsbeispiele der erfindungsgemäßen Lösung anhand der beigefügten schematischen Zeichnung näher erläutert. Es zeigt:
- Fig. 1: eine perspektivische Ansicht eines ersten Ausführungsbeispiels einer erfindungsgemäßen Trockner-Gutaufgabevorrichtung mit einem Trockner und einer Zuführeinrichtung und
- Fig. 2: eine perspektivische Ansicht eines ersten Ausführungsbeispiels einer erfindungsgemäßen Trockner-Gutaufgabevorrichtung in geöffnetem Zustand und
- Fig. 3: eine perspektivische Ansicht eines Materialflusses eines ersten Ausführungsbeispiels einer erfindungsgemäßen Trockner-Gutaufgabevorrichtung und
- Fig. 4: das Detail einer äußeren Überwurfeinrichtung einer erfindungsgemäßen Trockner-Gutaufgabevorrichtung und
- Fig. 5: das Detail einer inneren Überwurfeinrichtung einer erfindungsgemäßen Trockner-Gutaufgabevorrichtung.

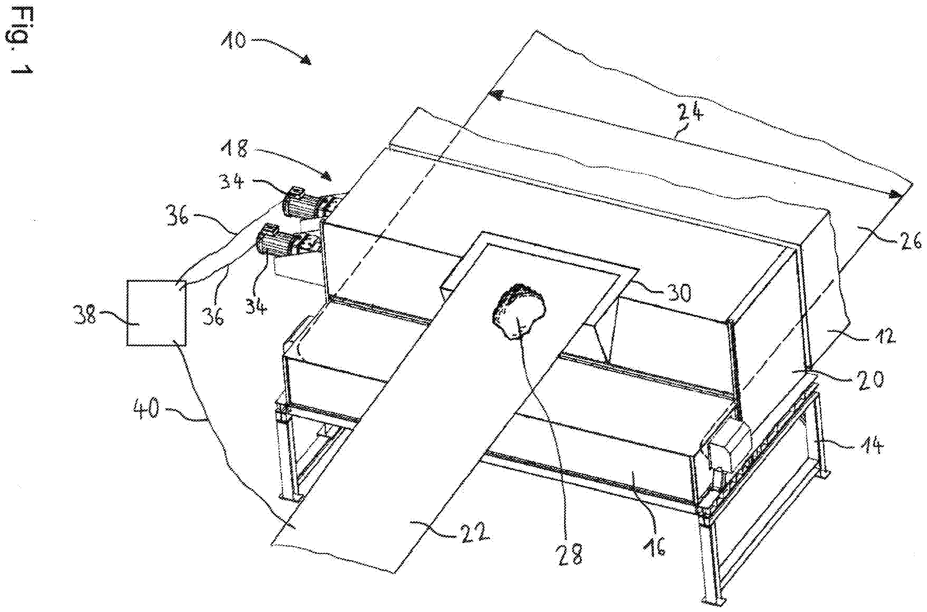

In der Fig.1 ist ein Trockner 10 mit (unter anderem) einem im Wesentlichen quaderförmigen Trocknergehäuse 12 und einem Rahmen 14 dargestellt. Auf dem Rahmen 14 sind eine Umlenkeinheit einer Transporteinrichtung 16 und eine Trockner-Gutaufgabevorrichtung 18 mit deren Gutaufgabegehäuse 20 und deren Zubringeinrichtung 22 montiert. Die Transporteinrichtung 16 weist eine Längserstreckung und eine Breite 24 auf, wobei die Breite 24 insbesondere die Breite eines Transportbandes 26 der Transporteinrichtung 16 repräsentiert, auf dem ein zu trocknendes Gut 28 in Richtung der Längserstreckung der Transporteinrichtung 16 durch einen Trockenbereich des Trockners 10 gefördert werden kann. Das zu trocknende Gut 28 sind Schüttgüter, welche mit Förderschnecken, Trogkettenförderern oder Förderbändern bewegbar sind, vorliegend Holzschnitzel oder Getreide.

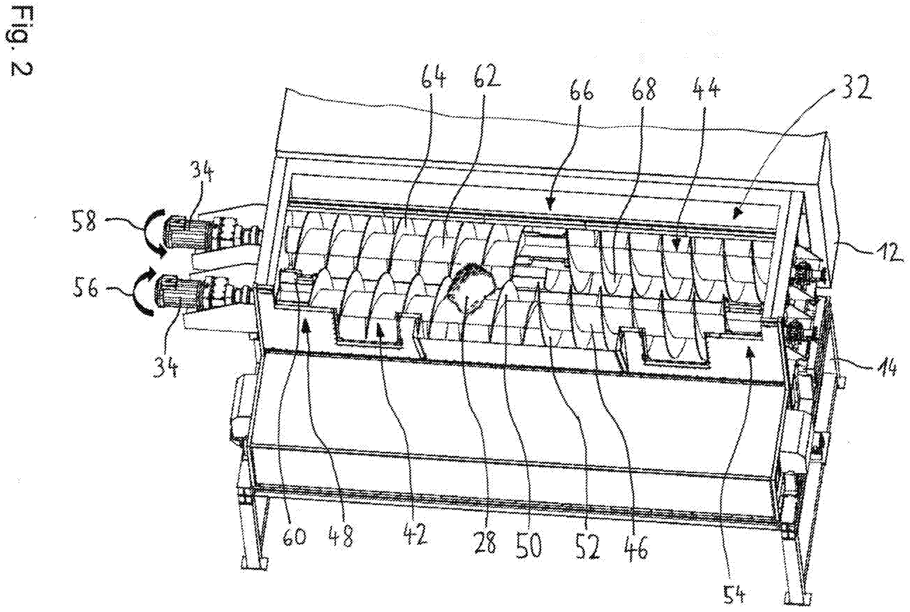

In dem Gutaufgabegehäuse 20 befindet sich mittig zu der Breite 24 der Transporteinrichtung 16 eine Zugabeöffnung 30 zu der mittels der Zubringeinrichtung 22 das Gut 28 gefördert werden kann. Das von der Zubringeinrichtung 22 zu der Zugabeöffnung 30 zugebrachte Gut 28 kann durch die Zugabeöffnung 30 hindurch von oben auf eine Verteileinrichtung 32, detailliert in Fig. 2 dargestellt, gegeben werden. Das Gut 28 kann mit dieser Verteileinrichtung 32 auf das Transportband 26 in einer gleichmäßig dicken Schicht aufgegeben werden.

Das auf die Verteileinrichtung 32 aufgegebene Gut 28 wird dabei von der Verteileinrichtung 32 zur Seite hin über die Breite 24 der Transporteinrichtung 16 bzw. insbesondere über das Transportband 26 hinweg verteilt, welches sich gleichzeitig in Richtung seiner Längserstreckung unter der Verteileinrichtung 32 hinwegbewegt. Bei diesem Verteilen durchläuft das Gut 28 insbesondere aufgrund der Schwerkraft die Verteileinrichtung 32 von oben nach unten. Zugleich bewegt die Verteileinrichtung 32, wie nachfolgend erläutert wird, das aufgegebene Gut 28 seitlich, um es über das Transportband 26 hinweg zu verteilen.

Die Verteileinrichtung 32 ist mit zwei Antrieben 34 ausgestattet, welche als Elektromotoren ausgeführt sind. Diese Antriebe sind mittels Leitungen 36 mit einer Regeleinrichtung 38 verbunden. Von der Regeleinrichtung 38 wird die von den Antrieben 34 aufgenommene Energiemenge ermittelt und ausgewertet. Mit der ermittelten, ausgewerteten Energiemenge regelt die Regeleinrichtung 38 mithilfe eines über eine Leitung 40 übertragenen Signals die Zubringeinrichtung 22. Die Zubringeinrichtung 22 erhöht oder verringert je nach Signaleingang die pro Zeiteinheit geförderte Masse an zugefördertem Gut 28.

In Fig. 2 ist eine Verteileinrichtung 32 dargestellt, welche für das seitliche Bewegen des Gutes 28 eine erste Förderschnecke 42 und eine zweite Förderschnecke 44 aufweist. Die erste Förderschnecke 42 ist mit einer zylinderförmigen, ersten Schneckenseele bzw. Schneckenwelle 46 gestaltet, an der an einem ihrer Endbereiche eine erste Überwurfeinrichtung 48 drehmomentenübertragend angebracht ist. Neben der ersten Überwurfeinrichtung 48 ist an der einen Hälfte der Längserstreckung der Schneckenwelle 46 eine erste, bezogen auf die Fig. 1 nach links außen fördernde Schneckenwindung 50 angebracht. Ferner ist an der Schneckenwelle 46 an deren anderen Hälfte eine zweite, bezogen auf die Fig. 1 nach rechts außen fördernde Schneckenwindung 52 und daneben außen eine zweite Überwurfeinrichtung 54 ortsfest angebracht.

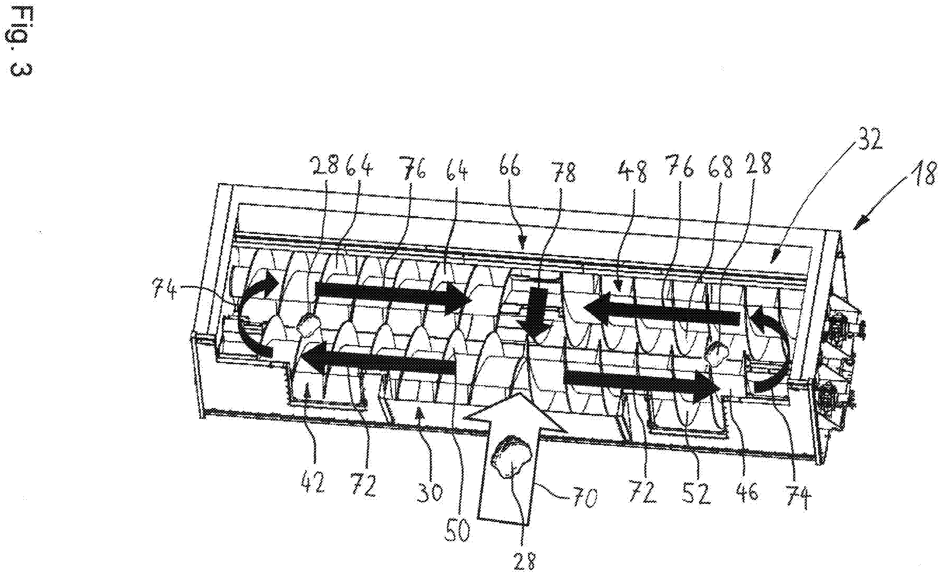

Die erste, nach links fördernde Schneckenwindung 50 ist zu der zweiten nach rechts fördernden Schneckenwindung 52 entgegengesetzt gewunden. Entsprechend befindet sich ein Übergang bzw. Wechsel der Windungsrichtungen der Schneckenwindungen 50 bzw. 52 in der Mitte der Schneckenwelle 46 bzw. der ersten Förderschnecke 42 und damit auch in der Mitte der Breite 24 der Transporteinrichtung 16 (siehe auch Fig. 3). Das durch die Zugabeöffnung 30 aufgegebene Gut 28 wird entsprechend von den beiden Schneckenwindungen 50 und 52 in zwei Teilströme aufgeteilt, wobei eine Hälfte des zugegebenen Gutes 28 von der nach links außen fördernden Schneckenwindung 50 weggefördert wird. Die zweite Hälfte des zugegebenen Gutes 28 wird von der nach rechts außen fördernden Schneckenwindung 52 weggefördert.

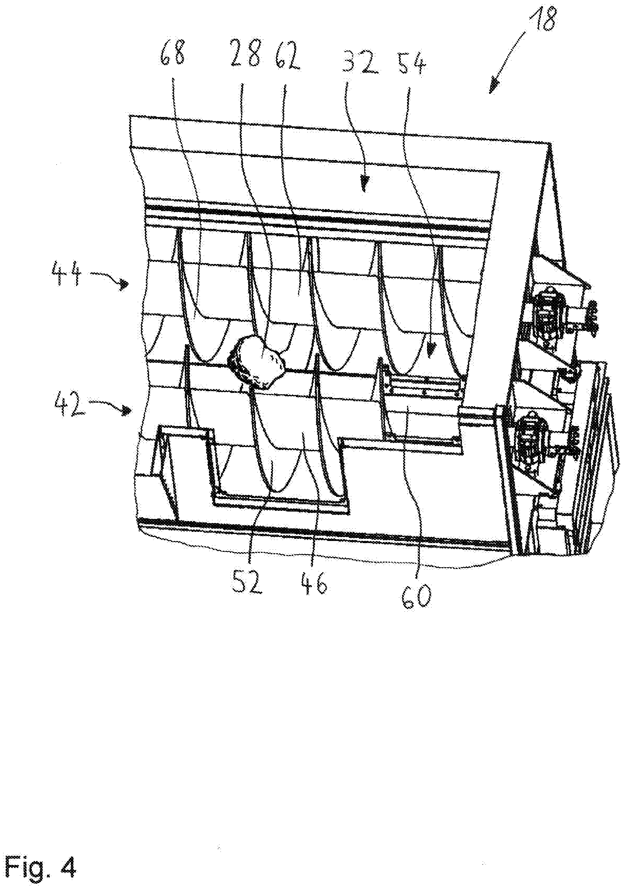

Die erste Förderschnecke 42 dreht sich mit einer ersten Drehrichtung 56 um ihre Längsachse bzw. um die Längsachse ihrer zylinderförmigen Schneckenwelle 46. Die erste Drehrichtung 56 ist so gewählt, dass die Schneckenwindungen 50 und 52 das Gut 28 zu dem jeweiligen äußeren Ende fördern. Das Gut 28 wird am Ende von der ersten nach außen fördernden Schneckenwindung 50 in die erste Überwurfeinrichtung 48 gefördert. Die erste Überwurfeinrichtung 48 wirft mittels zumindest eines ersten Überwurfpaddels 60, durch Drehung in Drehrichtung 56, überschüssiges Gut 28 zur zweiten Förderschnecke 44 hin über. Am Ende der zweiten nach außen fördernden Schneckenwindung 52 wirft die zweite Überwurfeinrichtung 54, im Detail in Fig. 4 dargestellt, überschüssige Gut 28 ebenfalls zu der zweiten Förderschnecke 44 hin über.

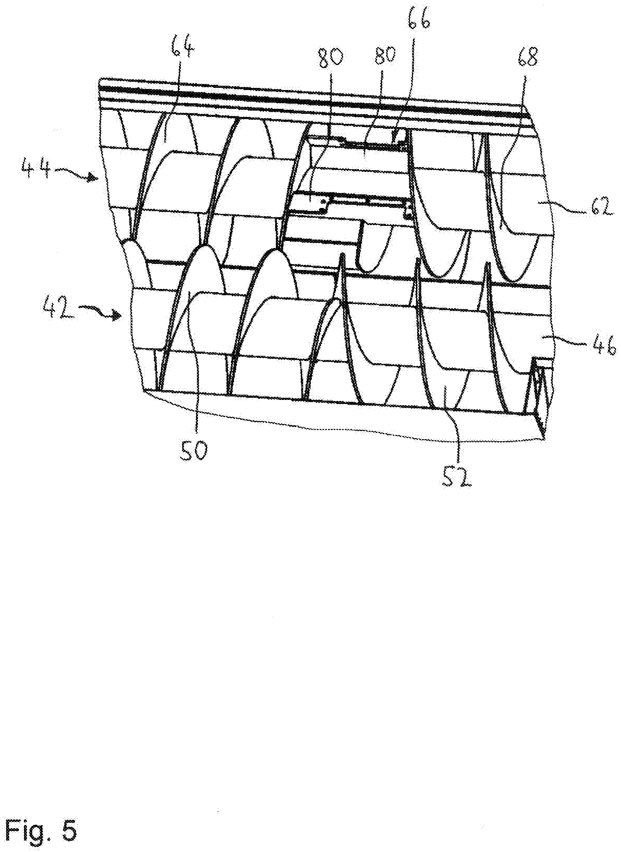

Die zweite Förderschnecke 44 umfasst eine zylinderförmige zweite Schneckenwelle 62 mit der, von einem Ende ausgehend, eine erste nach innen fördernde Schneckenwindung 64 drehmomentenübertragend verbunden ist. Neben der ersten nach innen fördernden Schneckenwindung 64 ist in Längsrichtung der Schneckenwelle 62 eine Überwurfeinrichtung 66 im Mittelbereich der Förderschnecke 44 vorgesehen, die ebenfalls mit der Schneckenwelle 62 drehmomentenübertragend verbunden ist. An die Überwurfeinrichtung 66 anschließend ist eine zweite ebenfalls nach innen fördernde Schneckenwindung 68, an der Schneckenwelle 62 angeformt. Die zweite nach innen fördernde Schneckenwindung 68 ist zu der ersten nach innen fördernden Schneckenwindung 64 entgegengesetzt gewunden. Die Schneckenwindung 68 überspannt die der ersten Schneckenwindung 64 gegenüberliegende Hälfte der Förderschnecke 44. Der Übergangsbereich von der Schneckenwindung 64 bzw. 68 zu der Überwurfeinrichtung 66 im Mittelbereich der Förderschnecke 44 ist in Fig. 5 näher veranschaulicht. Die zweite Förderschnecke 44 ist an ihrer Unterseite von einem U-förmigen, hier nicht dargestellten, Schneckentrog umgeben, welcher die Förderschnecke 44 in voller Länge aufnimmt. Der Schneckentrog verhindert aufgrund seiner Form ein Ausweichen des Gutes 28 zur Seite und nach unten in Richtung der Transporteinrichtung 16 und ist eng an die Außenkontur bzw. den Umfang der zweiten Förderschnecke 44 angepasst.

Die erste Förderschnecke 42 und die zweite Förderschnecke 44 sind jeweils mit einem Antrieb 34, der als Elektromotor ausgeführt ist, drehmomentenübertragend gekoppelt.

Das von der ersten Überwurfeinrichtung 48 an die zweite Förderschnecke 44 übergeworfene Gut 28 wird von der ersten nach innen fördernden Schneckenwindung 64 zur Mitte der zweiten Förderschnecke 44 hin gefördert. Das von der zweiten Überwurfeinrichtung 54 an die zweite Förderschnecke 44 übergeworfene Gut 28 wird von der zweiten nach innen fördernden Schneckenwindung 68 ebenfalls zur Mitte der zweiten Förderschnecke 44 hin gefördert.

Im Mittelbereich der zweiten Förderschnecke 44 wird dann überschüssiges Gut 28 in die Überwurfeinrichtung 66 im Mittelbereich gefördert und von dieser Überwurfeinrichtung 66 gegebenenfalls solch überschüssiges Gut 28 mittels zweiter Überwurfpaddel 60 zurück zur ersten Förderschnecke 42 übergeworfen. Es entstehen also zwei "Materialkreisläufe" von überschüssigem zu trocknenden Gut 28. Die zweite Förderschnecke 44 weist entsprechend eine zweite Drehrichtung 58 auf, die so gewählt ist, dass die Schneckenwindungen 64 und 68 das zu trocknende Gut 28 zur Mitte der zweiten Förderschnecke 44 hin fördern. Die zweite Drehrichtung 58 ist dabei vorzugsweise zur ersten Drehrichtung 56 entgegengesetzt.

Die Materialkreisläufe beginnen mit einem Pfeil 70 dargestellt, der die Materialeinbringung des zu trocknenden Gutes 28 veranschaulicht. Die Materialeinbringung erfolgt durch die Zugabeöffnung 30 hindurch in die Trockner-Gutaufgabevorrichtung 18 von oben mittig auf die Verteileinrichtung 32. Dort teilt sich der Materialfluss in zwei Hälften, in einen ersten, bezogen auf Fig. 3 linken Materialkreislauf und in einen zweiten, bezogen auf Fig. 3 rechten Materialkreislauf.

Der erste Materialkreislauf ergibt sich mit einer Förderung des Gutes 28 mit der ersten nach außen fördernden Schneckenwindung 50 nach links außen gemäß einem Pfeil 72. Dabei wird Gut 28 unterhalb der ersten Förderschnecke 42 auf dem Transportband 26, detailliert in Fig. 1 dargestellt, zu einer dortigen, gleichmäßig dicken Schicht verteilt. Dann erfolgt ein Umheben von überschüssigem Gut 28 gemäß einem Pfeil 74 an der Überwurfeinrichtung 48 hin zu der zweiten Förderschnecke 44. Weiter wird überschüssiges Gut 28 gemäß einem Pfeil 76 nach innen mittels der nach innen fördernden Schneckenwindung 64 gefördert. Dabei wird unter der zweiten Förderschnecke 44 die dort bereits ausgebildete Schicht des Gutes 28 mithilfe des nicht dargestellten Schneckentrogs weiter geglättet. Das überschüssige Gut 28 wird gemäß einem Pfeil 78 an der Überwurfeinrichtung 66 zurück zur ersten Förderschnecke 42 gefördert, um dort neu in den Materialkreislauf einzutreten und letztendlich ebenfalls auf dem Transportband 26 unter der Verteileinrichtung 32 verteilt zu werden. Der zweite Materialkreislauf ergibt sich in Entsprechung zum erläuterten ersten Materialkreislauf in umgekehrter Flussrichtung an der anderen Seite der Verteileinrichtung 32 (siehe dortige Pfeile).

Fig. 4 zeigt im Detail die zweite Überwurfeinrichtung 54. Die dortigen Überwurfpaddel 60 sind als gekröpfte, teilweise ausgenommene Überwurfpaddel 60 gestaltet. Diese Überwurfpaddel 60 sind auf der ersten Schneckenwelle 46 in Längsrichtung und in radialer Richtung ausgerichtet so angeschweißt, dass sie an der ersten Schneckenwelle 46 jeweils bezogen auf deren Achse einander gegenüberliegend angeordnet sind. Das gegenüberliegende Anordnen der Überwurfpaddel 60 an der Schneckenwelle 46 vermeidet eine Unwucht der Schneckenwelle 46 und vermindert durch eine Unwucht auftretende Vibrationen der Schneckenwelle 46. Die an der Schneckenwelle 46 angebrachten Überwurfpaddel 60 sind hinsichtlich ihrer Geometrie und Anzahl an die zu fördernde Menge des zu fördernden Gutes 28 angepasst. Die Überwurfeinrichtung 48 am gegenüberliegenden Ende der Förderschnecke 42 ist in gleicher Weise wie die Überwurfeinrichtung 54 gestaltet.

In Fig. 5 ist die Überwurfeinrichtung 66 im Mittelbereich der zweiten Förderschnecke 44 sowie der Übergang der Schneckenwindungen 50 und 52 an der ersten Förderschnecke 42 näher veranschaulicht. An dem Übergang bzw. am Kontaktbereich der nach außen fördernden Schneckenwindung 50 zu der nach außen fördernden Schneckenwindung 52 sind die Schneckenwindungen 50 und 52 miteinander ortsfest verbunden. Die Verbindung ist so ausgeführt, dass die Stirnseite der Schneckenwindung 50 mit der Stirnseite der Schneckenwindung 52 verschweißt ist. Am Übergang der jeweiligen Schneckenwindung 50 und 52 zur jeweiligen, anderen Schneckenwindung 52 bzw. 50 hin ist der Durchmesser der jeweiligen Schneckenwindung 50 und 52 auf nahezu den Durchmesser der Schneckenwelle 46 verringert.

Die Überwurfeinrichtung 66 ist mit mehreren Überwurfpaddeln 80 gebildet, die jeweils als gekröpfte, teilweise ausgenommene Überwurfpaddel 80 gestaltet sind und ortsfest mit der zweiten Schneckenwelle 62 verbunden, insbesondere verschweißt sind. Diese Überwurfpaddel 80 sind auf der zweiten Schneckenwelle 62 symmetrisch verteilt angeordnet, derart dass sie von der zweiten Schneckenwelle 62 in Längsrichtung und in Radialrichtung ausgerichtet nach außen hin abstehen.

### Bezugszeichenliste

- 10: Trockner
- 12: Trocknergehäuse
- 14: Rahmen
- 16: Transporteinrichtung
- 18: Trockner-Gutaufgabevorrichtung
- 20: Gutaufgabegehäuse
- 22: Zubringeinrichtung
- 24: Breite B
- 26: Transportband
- 28: zu trocknendes Gut
- 30: Zugabeöffnung
- 32: Verteileinrichtung
- 34: Antrieb
- 36: Leitung
- 38: Regeleinrichtung
- 40: Leitung
- 42: Förderschnecke
- 44: Förderschnecke
- 46: Schneckenwelle
- 48: Überwurfeinrichtung
- 50: nach außen fördernde Schneckenwindung
- 52: nach außen fördernde Schneckenwindung
- 54: Überwurfeinrichtung
- 56: Drehrichtung
- 58: Drehrichtung
- 60: Überwurfpaddel
- 62: Schneckenwelle
- 64: nach innen fördernde Schneckenwindung
- 66: Überwurfeinrichtung im Mittelbereich
- 68: nach innen fördernde Schneckenwindung
- 70: Pfeil zur Materialeinbringung
- 72: Pfeil zum Materialfluss nach außen
- 74: Pfeil zum Materialüberwurf
- 76: Pfeil zum Materialfluss nach innen
- 78: Pfeil zum Materialüberwurf
- 80: Überwurfpaddel

## Patentansprüche

1. Trockner-Gutaufgabevorrichtung (18) zum Verteilen von zu trocknendem Gut (28) an einem Trockner (10) über die Breite (24) einer das Gut (28) durch den Trockner (10) transportierenden Transporteinrichtung (16), mit einer Zugabeöffnung (30) zum Zugeben des zu trocknenden Gutes (28) in die Trockner-Gutaufgabevorrichtung (18), mit einer Zubringeinrichtung (22) zum Zubringen des zu trocknenden Gutes (28) zu der Zugabeöffnung (30) und einer Verteileinrichtung (32) zum Verteilen des durch die Zugabeöffnung (30) eingebrachten zu trocknenden Gutes (28) über die Breite (24) der Transporteinrichtung (16) hinweg, wobei mit der Verteileinrichtung (32) das zu trocknende Gut (28) von der Zugabeöffnung (30) aus in zwei einander entgegengesetzte Richtungen abzufördern ist,
wobei an der Verteileinrichtung (32) eine erste Förderschnecke (42) vorgesehen ist, mittels der das in zwei einander entgegengesetzte Richtungen erfolgende Abfördern auszuführen ist, und an der Verteileinrichtung (32) eine zweite Förderschnecke (44) vorgesehen ist, mittels der das zu trocknende Gut (28) aus zwei einander entgegengesetzten Richtungen zur Mitte der Transporteinrichtung (16) hin zusammenzufördern ist, und
mindestens eine der Förderschnecken (42, 44) mit mindestens einer Überwurfeinrichtung (48, 54, 66) zum Überwerfen des zu trocknenden Gutes (28) von der mindestens einen Förderschnecke (42, 44) zu der anderen Förderschnecke (42, 44) ausgestattet ist und
die Überwurfeinrichtung (48, 54, 66) mit mindestens einem Überwurfpaddel (60, 80) zum Überwerfen des zu trocknenden Gutes (28) von der einen Förderschnecke (42, 44) zur anderen Förderschnecke (42, 44) ausgestattet ist, wobei an der ersten Förderschnecke (42) an deren jeweiligen äußeren Endbereichen eine Überwurfeinrichtung (48, 54) angeordnet ist und an der zweiten Förderschnecke (44) an deren Mittelbereich eine Überwurfeinrichtung (66) angeordnet ist, wobei die Überwurfeinrichtung (66) im Mittelbereich der zweiten Förderschnecke (44) so ausgestattet ist, dass überschüssiges Gut (28) zurück zur ersten Förderschnecke (42) übergeworfen wird.

2. Trockner-Gutaufgabevorrichtung nach Anspruch 1,
**dadurch gekennzeichnet, dass** an der ersten Förderschnecke (42) zwei einander entgegengesetzt gewundene Schneckenwindungen (50, 52) vorgesehen sind.

3. Trockner-Gutaufgabevorrichtung nach einem der Ansprüche 1 oder 2, **dadurch gekennzeichnet dass** die Zugabeöffnung (30) hinsichtlich der Breite (24) der Transporteinrichtung (16) weitgehend mittig angeordnet ist.

4. Verfahren zum Verteilen von zu trocknendem Gut (28) an einem Trockner (10) über die Breite (24) einer das zu trocknende Gut (28) durch den Trockner (10) transportierenden Transporteinrichtung (16) hinweg, mittels einer Trockner-Gutaufgabevorrichtung (18) nach einem der Ansprüche 1 bis 3, bei dem von der Verteileinrichtung (32) das zu trocknende Gut (28) von einer Zugabeöffnung (30) aus in zwei einander entgegengesetzte Richtungen abgefördert wird.

## Claims

1. Dryer-material feed device (18) for distributing material (28) to be dried to a dryer (10) over the width (24) of a transport device (16) which transports the material (28) through the dryer (10), having an addition opening (30) for adding the material (28) to be dried to the dryer-material feed device (18), having a delivery device (22) for delivering the material (28) to be dried to the addition opening (30) and a distribution device (32) for distributing the material (28) to be dried which has been introduced through the addition opening (30) over the width (24) of the transport device (16), wherein the material (28) to be dried is to be conveyed by means of the distribution device (32) away from the addition opening (30) in two mutually opposite directions,
wherein there is provided at the distribution device (32) a first conveyor screw (42) by means of which the conveying away which takes place in two mutually opposite directions is to be carried out, and there is provided at the distribution device (32) a second conveyor screw (44) by means of which the material (28) to be dried is to be conveyed towards the middle of the transport device (16) from two mutually opposite directions, and
at least one of the conveyor screws (42, 44) is equipped with at least one throw-over device (48, 54, 66) for throwing over the material (28) to be dried from the at least one conveyor screw (42, 44) to the other conveyor screw (42, 44), and
the throw-over device (48, 54, 66) is equipped with at least one throw-over paddle (60, 80) for throwing over the material (28) to be dried from one conveyor screw (42, 44) to the other conveyor screw (42, 44),
wherein a throw-over device (48, 54) is arranged at the first conveyor screw (42) at each of the outer end regions thereof, and a throw-over device (66) is arranged at the second conveyor screw (44) in the middle region thereof, wherein the throw-over device (66) in the middle region of the second conveyor screw (44) is so equipped that excess material (28) is thrown back to the first conveyor screw (42).

2. Dryer-material feed device according to claim 1,
**characterised in that** two spirals (50, 52) which are wound in opposite directions to one another are provided on the first conveyor screw (42).

3. Dryer-material feed device according claim 1 or 2,
**characterised in that** the addition opening (30) is arranged largely centrally in respect of the width (24) of the transport device (16).

4. Method for distributing material (28) to be dried to a dryer (10) over the width (24) of a transport device (16) which transports the material (28) to be dried through the dryer (10), by means of a dryer-material feed device (18) according to any one of claims 1 to 3, in which the material (28) to be dried is conveyed by the distribution device (32) away from an addition opening (30) in two mutually opposite directions.

## Revendications

1. Dispositif pour alimenter en matériau un séchoir (18) de façon à répartir le matériau à sécher (28) au niveau d'un séchoir (10) sur toute la largeur (24) d'un dispositif de transport (16) transportant le matériau (28) à travers le séchoir (10), avec une ouverture d'alimentation (30) servant à amener le matériau à sécher (28) dans le dispositif pour alimenter en matériau un séchoir (18), avec un dispositif d'amenée (22) servant à amener le matériau à sécher (28) jusqu'à l'ouverture d'alimentation (30) et avec un dispositif d'étalement (32) servant à étaler le matériau à sécher (28) amené à travers l'ouverture d'alimentation (30) sur toute la largeur (24) du dispositif de transport (16), le matériau à sécher (28) étant séparé dans deux directions opposées l'une par rapport à l'autre depuis l'ouverture d'alimentation (30) à l'aide du dispositif d'étalement (32) ;
une première vis de transport sans fin (42) étant prévue au niveau du dispositif d'étalement (32) à l'aide de laquelle la séparation est réalisée dans deux directions opposées l'une par rapport à l'autre et une deuxième vis de transport sans fin (44) étant prévue au niveau du dispositif d'étalement (32) à l'aide de laquelle le matériau à sécher (28) est ramené vers le centre du dispositif de transport (16) depuis deux directions opposées l'une par rapport à l'autre ; et
au moins une vis de transport sans fin (42, 44) étant équipée d'au moins un dispositif de transvasement (48, 54, 66) servant au transvasement du matériau à sécher (28) de l'au moins une vis de transport sans fin (42, 44) jusqu'à l'autre vis de transport sans fin (42, 44) ; et
le dispositif de transvasement (48, 54, 66) étant équipé d'au moins une pale de transvasement (60, 80) pour le transvasement du matériau à sécher (28) de la première vis de transport sans fin (42, 44) jusqu'à l'autre vis de transport sans fin (42, 44) ;
un dispositif de transvasement (48, 54) étant disposé au niveau de la première vis de transport sans fin (42), au niveau de ses régions d'extrémité extérieures respectives et un dispositif de transvasement (66) étant disposé au niveau de la deuxième vis de transport sans fin (44) au niveau de sa région centrale, le dispositif de transvasement (66) étant équipé dans la zone centrale de la deuxième vis de transport sans fin (44) de façon à retransvaser le matériau (28) en surplus vers la première vis de transport sans fin (42).

2. Dispositif pour alimenter en matériau un séchoir selon la revendication 1, **caractérisé en ce que** deux circonvolutions de vis sans fin (50, 52) sont prévues au niveau de la première vis de transport sans fin (42) et enroulées de façon opposée l'une par rapport à l'autre.

3. Dispositif pour alimenter en matériau un séchoir selon l'une quelconque des revendications 1 ou 2, **caractérisé en ce que** l'ouverture d'alimentation (30) est disposée de façon largement centrale par rapport à la largeur (24) du dispositif de transport (16).

4. Procédé d'étalement du matériau à sécher (28) au niveau d'un séchoir (10) sur l'ensemble de la largeur (24) d'un dispositif de transport (16) transportant le matériau à sécher (28) à travers le séchoir (10), au moyen d'un dispositif pour alimenter en matériau un séchoir (18) selon l'une quelconque des revendications 1 à 3, dans lequel depuis une ouverture d'alimentation (30), le matériau à sécher (28) est séparé par le dispositif d'étalement (32) dans deux directions opposées l'une par rapport à l'autre.
